# EUROPÄISCHE PATENTSCHRIFT

(11) **EP 3 254 349 B1**
(45) Veröffentlichungstag und Bekanntmachung des Hinweises auf die Patenterteilung: **30.10.2019**
(21) Anmeldenummer: 16714828.7
(22) Anmeldetag: 29.03.2016
(51) Int. Cl.: H02B 13/045

(54) **VERSCHLUSSBAUGRUPPE MIT EINER WANDUNG**
COVER WITH WALL
COUVERCLE AVEC PAROI

(30) Priorität: 01.04.2015 DE 102015205915
(43) Veröffentlichungstag der Anmeldung: 13.12.2017
(73) Patentinhaber: Siemens Aktiengesellschaft, 80333 München (DE)
(72) Erfinder: GROHALL, Sven, 10961 Berlin (DE); LUDENIA, Dan, 14621 Schönwalde-Glien OT Schönwalde-Siedlung (DE)
(86) Internationale Anmeldenummer: PCT/EP2016/056813
(87) Internationale Veröffentlichungsnummer: WO 2016/156324

(56) Entgegenhaltungen:
- EP-A1- 2 254 135
- WO-A1-2014/198580
- DE-A1- 3 313 192
- FR-A1- 2 803 117
- GB-A- 2 191 259

## Beschreibung

Die Erfindung betrifft eine Verschlussbaugruppe mit einer Wandung, die zumindest eine Ausnehmung aufweist, welche in einer Querungsrichtung die Wandung durchsetzt und von einem Bund umgriffen ist.

Eine Verschlussbaugruppe ist beispielsweise aus der Offenlegungsschrift DE 10 2012 215 246 A1 bekannt. Dort ist ein druckfluidisoliertes Schaltfeld beschrieben, welches Flanschöffnungen aufweist. Die Flanschöffnungen sind jeweils mit einer Verschlussbaugruppe verschlossen, wobei eine Wandung der jeweiligen Verschlussbaugruppe jeweils eine der Flanschöffnungen überspannt. Die dortigen Wandungen sind jeweils mit einer Ausnehmung versehen, welche in einer Querrichtung die Wandung durchsetzt. Bei dem bekannten druckfluidisolierten Schaltfeld sind in die Ausnehmungen jeweils Phasenleiterdurchführungen eingesetzt, so dass eine Verschlussbaugruppe einen Innenraum des druckfluidisolierten Schaltfeldes hermetisch abschließt. Je nach Druckbeaufschlagung des druckfluidisolierten Schaltfeldes sind die Wandungen der Verschlussbaugruppen entsprechend massiv auszugestalten. Mit zunehmenden Drücken sind die Wandungen der Verschlussbaugruppen entsprechend zu verstärken.

Aus der Publikation FR 2 803 117 geht eine Hochspannungselektroinstallation hervor, welche einen kombinierten Trenn- und Erdungsschalter aufweist. Die Hochspannungselektroinstallation weist ein Metallgehäuse auf, welches mit Flanschen ausgestattet ist. Zum Verschluss eines Flansches wird ein Deckel genutzt, welcher eine Ausnehmung aufweist, die von einem Bund umgriffen ist. Ein ähnlicher Deckel ist aus der EP 2 254 135 A1 bekannt. Aus der internationalen Veröffentlichung WO2014/198580 A1 geht ein Hohlkörper für eine gasisolierte Schaltanlage hervor, welcher in gewölbten Wandungen angesetzte Flansche aufweist. Aus der Patentanmeldung GB 2 191 259 A ist eine gekapselte elektrische Vorrichtung bekannt, welche zum Verschluss eines Flansches einen zweilagigen Deckel aufweist. Aus der Offenlegungsschrift DE 33 13 192 ist ein Verschlussteil entnehmbar, welches zentrisch eine Erhebung aufweist.

Die bekannten Verschlussbaugruppe weisen vergleichbar hohe Gestehungskosten auf, um auch bei hohen Drücken eine ausreichende Winkelsteifigkeit zu erzielen. Weiterhin weist eine derartige Verschlussbaugruppe auch eine verhältnismäßig große Masse auf. Eine große Masse erschwert einen Transport und eine Handhabe der Verschlussbaugruppe.

Somit ergibt sich als Aufgabe der Erfindung, eine Verschlussbaugruppe anzugeben, welche bei reduzierter Masse eine hohe Winkelsteifigkeit aufweist.

Erfindungsgemäß wird die Aufgabe bei einer Verschlussbaugruppe der eingangs genannten Art dadurch gelöst, dass in der Wandung im Wesentlichen in der Querungsrichtung eine Erhebung gewölbt aus der Wandung hervortritt, wobei die Erhebung eine Versteifung der Wandung bewirkt und im Wesentlichen quer zur Querungsrichtung eine Schwelle, Bund und Erhebung verbindend, in der Erhebung sowie in dem Bund mündet.

Eine Verschlussbaugruppe dient einem Verschluss einer Öffnung, beispielsweise an einem Gehäuse. Die Verschlussbaugruppe kann insbesondere einen fluiddichten Verschluss (bei entsprechender Dichtung der Ausnehmung der Wandung) einer Öffnung an einem Kapselungsgehäuse bewirken. Die Wandung erstreckt sich dabei im Wesentlichen quer zur Querungsrichtung der Ausnehmung, so dass die Wandung der Verschlussbaugruppe insbesondere eine Öffnung in einem Kapselungsgehäuse überspannen kann. Die Wandung kann dabei verschiedenartig geformt bzw. profiliert sein, wobei durch eine Anordnung eine Erhebung in der Wandung eine Versteifung derselben bewirkt wird, wodurch eine Massereduzierung der Wandung selbst und damit der Verschlussbaugruppe erzielt werden kann. Die Erhebung wölbt sich dabei im Wesentlichen in Querungsrichtung der Ausnehmung aus der Wandung bzw. aus einer Oberfläche der Wandung aus. Die Wandstärke der Erhebung kann dabei im Wesentlichen der Wandstärke der Wandung entsprechen. Eine Erhebung kann insbesondere streifenförmig nach Art einer Schulter, insbesondere linear in der Wandung erfolgen, wodurch der Streifen im Wesentlichen quer zur Querungsrichtung liegend angeordnet sein sollte.

Erfindungsgemäß kann weiter vorteilhaft vorgesehen sein, dass in der Wandung sich im Wesentlichen in der Querungsrichtung eine Senke in die Wandung eintaucht.

Mittels einer Senke besteht die Möglichkeit, punktuell eine Krümmung in die Wandung einzubringen, wodurch einem Verformen entgegengewirkt wird, da die Wandung eine Versteifung durch die Senke erfährt. Die Senke kann dabei im Wesentlichen hohlkehlenartig ausgeformt sein, wobei sich die Senke in Richtung der Querungsrichtung auswölbt. Eine Senke kann im Wesentlichen streifenförmig, insbesondere linear verlaufen.

Mit einer Profilierung der Wandung durch eine Erhebung oder eine Senke in der Wandung kann deren Steifheit verstärkt werden.

Insbesondere bei mehreren Ausnehmungen, welche beabstandet zueinander angeordnet sind, kann ein streifenförmiger bzw. bandartiger Verlauf der Erhebung bzw. der Senke vor den Ausnehmungen, d. h. insbesondere im Wesentlichen parallel zu einer Achse, welche die beiden Ausnehmungen in einer Draufsicht in Querungsrichtung verbindet, erfolgen. Weiterhin sollte bei einem bandartigen bzw. streifenförmigen Ausgestalten der Erhebung bzw. der Senke ein hohlkehlenartiges Profil (Senke) bzw. ein schulterartiges Profil (Erhebung) vorgesehen sein, welche entlang einer Bahn, insbesondere einer Geraden, im Wesentlichen bandartig verläuft.

Dabei kann vorgesehen sein, dass durch die Erhebung eine Verstärkung der Wandungsstärke im Bereich der Erhebung erfolgt. Es kann vorgesehen sein, dass durch die Senke eine Reduzierung der Wandungsstärke im Bereich der Senke erfolgt. Es kann jedoch auch vorgesehen sein, dass sowohl im Bereich der Wandung und/oder im Bereich der Senke eine annähernd gleichbleibende Wandungsstärke im Vergleich zur Wandstärke der Wandung am Übergang zu der Erhebung bzw. zu der Senke vorgesehen ist.

Eine vorteilhafte Ausgestaltung kann vorsehen, dass Erhebung und Senke versetzt zueinander angeordnet sind.

Durch einen Versatz einer Erhebung und einer Senke ist es möglich, Erhebung und Senke ineinander übergehen zu lassen, so dass ausgehend von einem Bodenbereich der Senke zu einer Spitze der Erhebung eine vergrößerte Auslenkung in der Querungsrichtung in der Wandung erzielt wird. Damit kann eine zusätzliche Versteifung in der Wandung der Verschlussbaugruppe erzielt werden, wodurch vergrößerte Öffnungen mittels der Verschlussbaugruppe verschlossen werden können. Bei einem Versatz von Erhebung und Senke zueinander kann vorgesehen sein, dass der Verlauf von Erhebung und Senke im Wesentlichen in paralleler Art und Weise erfolgt. So kann beispielsweise auch ein s-förmig geschwungener Bereich in der Wandung erzeugt werden, indem ein gegensinniges Wölben der Wandung im Bereich der Erhebung sowie im Bereich der Senke hervorgerufen wird.

Weiterhin wird durch einen Versatz der Erhebung und der Senke zueinander ein vergrößerter Flächenbereich in der Wandung geschaffen, welcher gegensinnig ansteigende Bereiche in der Wandung zur Verfügung stellt, wodurch eine erhöhte Verwindungssteifigkeit der Verschlussbaugruppe erzielt werden kann.

Eine vorteilhafte Ausgestaltung kann vorsehen, dass Erhebung und Senke auf voneinander abgewandten Seiten der Wandung liegen.

Eine Anordnung von einer Erhebung und einer Senke auf voneinander abgewandten Seiten kann bewirken, die Erhebung und die Senke nicht nur in die gleiche Richtung auszubauchen, sondern auch mit gleichem Richtungssinn ausbauchen zu lassen. Dadurch können an der Verschlussbaugruppe Auswölbungen entstehen, welche beispielsweise im Innern eines Kapselungsgehäuses einen vergrößerten Aufnahmeraum zur Verfügung stellen.

Weiter kann vorteilhaft vorgesehen sein, dass Erhebung und Senke fluchtend angeordnet sind.

Bei einer fluchtenden Anordnung (insbesondere in Querungsrichtung) von Erhebung und Senke auf insbesondere voneinander abgewandten Seiten ist es vorteilhaft, wenn die Erhebung sowie die Senke in Querungsrichtung gesehen eine annähernd deckungsgleiche Ausdehnung aufweisen. Bei einem derartigen Übereinanderliegen können Erhebung und Senke in der Wandung beispielsweise eine Ausbauchung bzw. Einsickung bewirken, wobei die Wandstärke der Wandung annähernd in der Ausbauchung bzw. Einsickung beibehalten werden kann. Es kann auch vorgesehen sein, dass die Erhebung und die Senke zwar fluchtend angeordnet sind, jedoch die Profilierung von Erhebung und Senke voneinander abweichen, wodurch auch eine zusätzliche Profilierung der Wandungsstärke im Bereich der Senke bzw. der Erhebung bewirkt werden kann.

Eine weitere vorteilhafte Ausgestaltung kann vorsehen, dass im Wesentlichen quer zur Querungsrichtung eine Schwelle in der Senke mündet.

Eine Schwelle, welche im Wesentlichen quer zur Querungsrichtung liegt, kann insbesondere im Wesentlichen lotrecht zur Querungsrichtung ausgerichtet sein. Dabei kann die Schwelle in einer Erhebung bzw. in einer Senke münden, so dass Kräfte ausgehend von der Erhebung bzw. der Senke in die Schwelle eingeleitet und fortgeleitet werden können. Im Bereich der Schwelle sollte die Wandungsstärke durch die Schwelle selbst vergrößert werden, so dass die Wandungsstärke in der Senke bzw. in der Erhebung eine Profilierung erfährt, wodurch ein flächiger Verbund (gegebenenfalls einstückig) zwischen Schwelle und Senke bzw. Erhebung gegeben ist. Eine Schwelle kann dabei verschiedenartige Querschnittprofile aufweisen. Als geeignet haben sich beispielsweise im Wesentlichen rechteckige Profile erwiesen, welche im Bereich des Überganges in die Erhebung bzw. in die Senke mit einer Querschnittreduktion versehen sein können.

Eine weitere vorteilhafte Ausgestaltung kann vorsehen, dass mehrere Schwellen im Wesentlichen parallel zueinander verlaufend angeordnet sind.

Mehrere parallel zueinander angeordnete Schwellen können beispielsweise linear gestreckt ausgebildet sein. Es kann jedoch auch vorgesehen, dass die Schwellen einen beliebigen Kurvenverlauf folgen, wobei der Kurvenverlauf der einzelnen Schwellen annähernd parallel zueinander liegen sollte. Eine Nutzung mehrerer Schwellen ermöglicht eine Bündelung von Kräften in den einzelnen Schwellen, wodurch andere Bereiche der Wandung von Kräften entlastet werden.

Es ist erfindungsgemäß vorgesehen, dass die Ausnehmung von einem Bund umgriffen ist.

Ein Umgriff einer Ausnehmung mittels eines Bundes bewirkt eine Wandungsverstärkung, wodurch ein Ausreißen der Ausnehmungen bei mechanischer Belastung erschwert ist. An dem Bund können beispielsweise auch Befestigungselemente angreifen, wodurch ein die Ausnehmung verschließendes Element auch fixiert werden kann. Beispielsweise können in dem Bund Gewindebohrungen in Sacklöchern angeordnet sein.

Es ist erfindungsgemäß vorgesehen, dass zumindest eine der Schwellen im dem Bund mündet.

Eine Mündung einer Schwelle in dem Bund gestattet es, den Bund über die Schwelle mit der Erhebung bzw. der Senke zu verbinden, so dass Kräfte, welche am Bund angreifen, über die Schwelle auch in die Bereich der Erhebung bzw. der Senke eingeleitet werden können. Damit kommt eine Stabilisierung der Wandung der Verschlussbaugruppe zum Tragen, so dass eine massereduzierte Verschlussbaugruppe gebildet werden kann, welche in sich winkelstarr ausgebildet ist.

Eine weitere vorteilhafte Ausgestaltung kann vorsehen, dass die Senke und/oder die Erhebung streifenförmig verlaufen.

Ein streifenförmiger Verlauf der Senke bzw. der Erhebung führt zu einer hohlkehlenförmigen Senke bzw. einer schulterartigen Erhebung, wobei sowohl die Senke als auch die Erhebung frei von scharfkantigen Körperkanten sein sollten. So ist es beispielsweise möglich, dass die Senke einen wannenförmigen Querschnitt aufweist, wohingegen die Erhebung in Richtung des Verlaufes des Streifens eine positiv gekrümmte Oberfläche aufweist. Durch die Streifenform kann sich die Erhebung bzw. die Senke auch über verlängerte Bereiche erstrecken. Vorteilhaft können Kräfte auch über eine Schwelle in einen Bund an der Ausnehmung übertragen werden. Eine Schwelle kann im Wesentlichen quer zu der Senke bzw. der Erhebung verlaufen.

Eine weiter vorteilhafte Ausgestaltung kann vorsehen, dass in die Ausnehmung eine Phasenleiterdurchführung eingesetzt ist.

Eine Phasenleiterdurchführung ist eine Einrichtung, mittels welcher ein elektrisch leitfähiger Phasenleiter die Wandung der Verschlussbaugruppe passiert. Dabei sollte das Passieren zum einen elektrisch isoliert vorgesehen sein, zum anderen sollte die Phasenleiterdurchführung nebst Phasenleiter die Ausnehmung fluiddicht verschließen. So ist die Möglichkeit gegeben, mittels der Verschlussbaugruppe eine Öffnung an einem Kapselungsgehäuse fluiddicht zu verschließen, wobei ein Phasenleiter der Phasenleiterdurchführung in Querungsrichtung der Ausnehmung die Wandung durchsetzt. Insbesondere kann die Wandung aus einem elektrisch leitfähigen Material, beispielsweise einem Metall wie Aluminium, ausgebildet sein. Als vorteilhaft haben sich metallische Gusskörper erwiesen, um eine Wandung auszuformen. Ein Gusskörper an sich kann fluiddicht ausgeführt sein.

Eine weitere vorteilhafte Ausgestaltung kann vorsehen, dass die Wandung zumindest eine im Wesentlichen gerade Körperkante aufweist, zu welcher eine Achse zwischen einer ersten Ausnehmung und einer zweiten Ausnehmung im Wesentlichen parallel ausgerichtet ist.

Eine Wandung kann beispielsweise eine im Wesentlichen rechteckförmige Grundstruktur aufweisen, wobei im Wesentlichen lotrecht zur Draufsicht auf die Rechteckform der Wandung die Querungsrichtung der Ausnehmungen angeordnet ist. Sind nunmehr mehrere Ausnehmungen in der Wandung angeordnet, so sind diese bevorzugt beabstandet voneinander angeordnet, wobei die Ausnehmungen auf einer Achse versetzt angeordnet sein können. Der Verlauf der Achse sollte parallel zu einer insbesondere geraden Körperkante der Wandung ausgerichtet sein. Insbesondere bei dem Vorhandensein von drei auf einer Achse liegenden Ausnehmungen sollte diese Achse quer zur Querungsrichtung und parallel zu einer geraden Körperkante der Wandung ausgerichtet sein. Parallel zu dieser Achse kann auch der Verlauf einer streifenartigen Erhebung bzw. einer streifenartigen Senke vorgesehen sein, so dass beispielsweise ein s-förmig gewelltes Profil in der Wandung erzielt werden kann.

Eine weiter vorteilhafte Ausgestaltung kann vorsehen, dass die Wandung Teil eines Flanschdeckels ist.

Ein Flanschdeckel ist eine Verschlussbaugruppe, welche einem Verschließen einer Flanschöffnung eines Flansches dient. Dabei kann der Flanschdeckel bevorzugt fluiddicht mit dem Flansch verflanscht werden, wobei die Wandung eine Flanschöffnung des Flansches überspannt und verschließt. Dabei ist vorteilhaft vorsehbar, dass der Flanschdeckel die Flanschöffnung fluiddicht verschließt, wobei in die Ausnehmung der Wandung eine Phasenleiterdurchführung fluiddicht eingesetzt sein kann, so dass ein Hindurchtreten von einem Fluid durch die Verschlussbaugruppe selbst bzw. durch einen Fügespalt zwischen Verschlussbaugruppe und Flansch verhindert ist.

Eine weitere vorteilhafte Ausgestaltung kann vorsehen, dass die Wandung von einem Flanschblatt zumindest teilweise umgriffen ist, in welchem die Wandung pultartig verkippt angeordnet ist.

Durch einen pultartigen Verlauf der Wandung wird eine Wandung geschaffen, welche insbesondere relativ zu der Ebene des Flanschblattes bzw. relativ zur Ebene der Anpressfläche des Bundes geneigt verläuft. Insbesondere kann durch eine asymmetrische pultartige Verkippung ein asymmetrischer Anstieg innerhalb der Wandung erzielt werden, so dass zusätzlich zu einer Erhebung oder einer Senke eine Kante in der Wandung auf Grund eines keilartigen Pultanstieges gegeben ist. Insbesondere kann ein asymmetrischer Verlauf der Verkippung vorgesehen sein, so dass beispielsweise ein Anstieg von einer geraden Körperkante hin zu dem Bund der Verschlussbaugruppe gegeben ist, wobei vom Bund wiederum ein Abfallen hin zu der Ebene des Flanschblattes erfolgen kann. Dabei ist der keilförmige Anstieg über eine größere Wegstrecke ausgedehnt als eine Wegstrecke eines Abfalles von dem Bund zu der Ebene des Flanschblattes zurück.

Insbesondere ein keilartiger Anstieg einer pultartig verkippten Wandung kann mit einer Erhebung bzw. mit einer Senke versehen sein, so dass derartige Flächen, die insbesondere freitragend über einer Flanschöffnung positioniert sein können, in sich stabilisiert sind. Somit ist es möglich, lediglich im Bereich des Bundes eine Materialverstärkende Wandungsdicke vorzusehen und den pultartigen Anstieg durch eine Profilierung mit Senke bzw. Erhebung gegebenenfalls zusätzlich mit Schwellen verstärkt auszugestalten. Damit kann einerseits eine winkelsteife Struktur geschaffen werden, die in Ausnehmungen Phasenleiterdurchführungen aufnehmen kann und diese positioniert. Andererseits kann der Bereich, welcher einem Überspannen und Abdecken einer Flanschöffnung dient und nicht einem unmittelbaren Haltern von Phasendurchführungen zur Verfügung stehen muss, mit einer reduzierten Wandungsstärke versehen sein.

Eine weitere vorteilhafte Ausgestaltung kann vorsehen, dass das Flanschblatt eine Anlagefläche in einer ersten Ebene aufweist und der Bund eine Anlagefläche in einer zweiten Ebene aufweist, wobei die beiden Ebenen im Wesentlichen parallel zueinander ausgerichtet sind.

Durch eine Definition einer ersten Ebene sowie einer zweiten Ebene, die im Wesentlichen parallel liegen, ist ein Raum geschaffen, innerhalb welchem eine Wandung nebst Einsenkung bzw. Erhebung einen Formverlauf aufweisen kann. Durch eine Parallelanordnung der ersten sowie der zweiten Ebene sind das Flanschblatt sowie die Anlagefläche des Bundes parallel zueinander ausgerichtet. Der lotrechte Abstand zwischen den beiden Ebenen kann dabei die maximale Höhe der Wandung begrenzen. Somit ist es möglich, trotz Abweichungen von lotrechten bzw. rechtwinkligen Strukturen der Wandung genormte Anlagebereiche an der Verschlussbaugruppe anzuordnen und dabei innerhalb dieses Bereiches eine profilierte Wandung unterzubringen. Insbesondere bei einem pultartigen Verkippen der Wandung können so asymmetrische Verläufe innerhalb der Wandung erzeugt werden, wobei jedoch stets normierte Anlageflächen in einer ersten sowie einer zweiten Ebene vorgesehen sind, die wiederum im Wesentlichen parallel zueinander ausgerichtet sind und die Ausdehnung der Wandung in Querungsrichtung begrenzen. Bevorzugt können die Anlageflächen der ersten Ebene sowie der zweiten Ebene entgegengesetzt zueinander ausgerichtet sein, so dass Anpresskräfte mit entgegengesetztem Richtungssinn in die Verschlussbaugruppe eingeleitet werden können. Vorteilhaft kann dabei vorgesehen sein, dass die Anlagefläche des Bundes sich zumindest teilweise in Schwellen hinein erstreckt, wodurch ein kammartiger Abschluss der Anlagefläche des Bundes erzeugbar ist.

Im Folgenden wird ein Ausführungsbeispiel der Erfindung schematisch in einer Figur gezeigt und nachfolgend näher beschrieben. Dabei zeigt die
- Fig. 1: eine perspektivische Draufsicht auf eine Verschlussbaugruppe, die
- Fig. 2: eine perspektivische Unteransicht der aus der Fig. 1 bekannten Verschlussbaugruppe, die
- Fig. 3: eine perspektivische Draufsicht der Verschlussbaugruppe wie in der Fig. 1 gezeigt, komplettiert mit Phasenleiterdurchführungen,
- Fig. 4: eine perspektivische Unteransicht der Verschlussbaugruppe wie aus der Fig. 2 bekannt komplettiert mit Phasenleiterdurchführungen und die
- Fig. 5: einen Querschnitt durch die Verschlussbaugruppe.

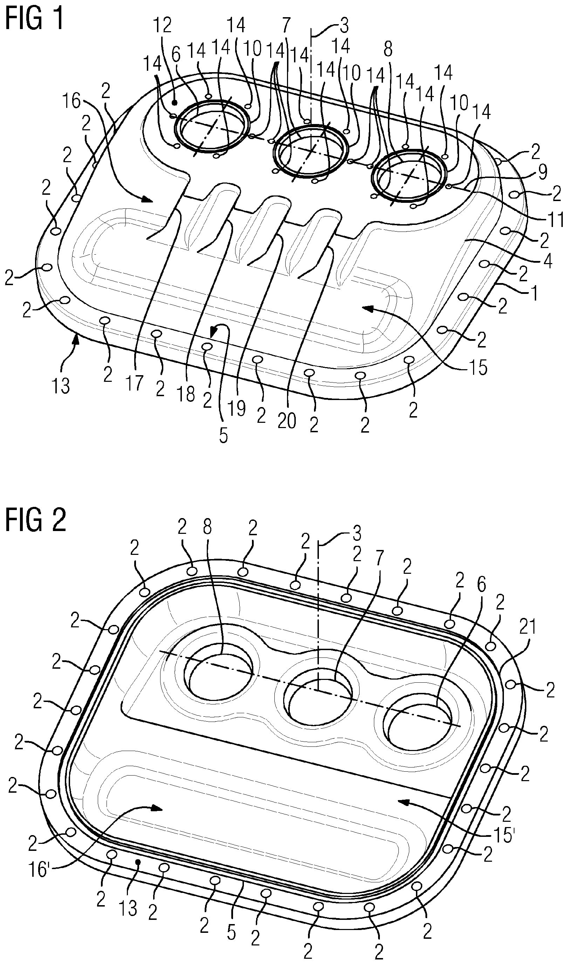

Die Figur 1 zeigt eine Verschlussbaugruppe in einer perspektivischen Draufsicht. Die Verschlussbaugruppe weist ein Flanschblatt 1 auf. Das Flanschblatt 1 weist im Wesentlichen einen rechteckigen Verlauf auf, wobei die Ecken gerundet gebrochen sind. Das Flanschblatt 1 ist von mehreren Bohrungen 2 durchsetzt, wobei die Bohrungen 2 das Flanschblatt 1 in einer Querungsrichtung 3 durchsetzen. Die Bohrungen 2 sind untereinander sowie zur Querungsrichtung 3 im Wesentlichen parallel ausgerichtet. Das Flanschblatt 2 dient einem Befestigen der Verschlussbaugruppe an einem gegengleich ausgebildeten Flansch, um eine Flanschöffnung des Flansches mittels der Verschlussbaugruppe zu verschließen. In dem von dem Flanschblatt 1 umgriffenen Bereich erstreckt sich eine Wandung 4 der Verschlussbaugruppe. Vorliegend ist das Flanschblatt 1 in sich vollständig geschlossen umlaufend ausgebildet, so dass innenmantelseitig am Flanschblatt 1 ein vollständiger Umschluss der bzw. Anschluss an die Wandung 4 gegeben ist. Alternativ kann auch vorgesehen sein, dass das Flanschblatt 1 lediglich abschnittsweise ausgebildet ist, wobei in Umlaufrichtung verteilt beispielsweise mehrere Laschen entlang des in der Figur 1 gezeigten Weges des Flanschblattes 1 angeordnet sind, um ein entsprechendes Befestigen der Verschlussbaugruppe zu ermöglichen.

Die Wandung 4 weist vorliegend einen pultartigen Verlauf auf, wobei von einer geraden Körperkante 5, welche an einem entsprechend geraden Abschnitt des Flanschblattes 1 anliegt, ein keilartiger Anstieg der Wandung 4 erfolgt. Dabei ist der keilartige Anstieg derart ausgebildet, dass eine Profilierung des Anstiegskeiles vorgenommen wurde. An der auf der gegenüber liegenden Seite zur geraden Körperkante 5 liegenden Seite der Wandung 4 weist die Wandung 4 einen im Wesentlichen in Querungsrichtung 3 abfallenden Verlauf auf, um die keilartige Erhebung der Wandung 5 auszugleichen und die Wandung 4 mit dem Flanschblatt 1 zu verbinden.

In der Wandung 4 sind eine erste Ausnehmung 6, eine zweite Ausnehmung 7 sowie eine dritte Ausnehmung 8 angeordnet. Die Ausnehmungen 6, 7, 8 durchsetzen die Wandung 4 in Querungsrichtung 3. Dabei sind die Ausnehmungen 6, 7, 8 gleichartig dimensioniert. Die Ausnehmungen 6, 7, 8 weisen jeweils einen kreisrunden Querschnitt auf, wobei die Ausnehmungen 6, 7, 8 entlang einer Achse 9 beabstandet zueinander angeordnet sind. Die Achse 9 liegt dabei im Wesentlichen parallel zur geraden Körperkante 5. Die Ausnehmungen 6, 7, 8 sind jeweils von einer Ringnut 10 umschlossen. Die Ringnuten 10 ihrerseits sind in die Wandung 4 eingebracht. Dazu weist die Wandung 4 einen Bund 11 auf, welcher die Ausnehmungen 6, 7, 8 umgreift. Der Bund 11 weist eine entsprechende Anlagefläche auf, welche in einer zweiten Ebene 12 liegt. In der zweiten Ebene 12 der Anlagefläche münden die Ringnuten 10. Weiter sind am Umfang der Ausnehmungen 6, 7, 8 Sacklöcher 14 mit Innengewinde angeordnet, mittels welcher weitere Bauteile gegen die Anlagefläche verspannt werden können.

Weiter ist im Bereich des keilförmigen Anstieges der Wandung 4 eine Erhebung 15 angeordnet. Die Erhebung 15 erstreckt sich im Wesentlichen streifenartig, parallel zur geraden Körperkante 5 sowie parallel zur Achse 9. Im Bereich zwischen der Erhebung 15 sowie dem Bund 11 ist im Anstieg der Wandung 4 eine Senke 16 angeordnet. Dadurch ist im Bereich der ansteigenden Wandung 4 eine wellenartige Struktur mit positiver sowie negativer Krümmung gegeben. Die Senke 16 erstreckt sich ebenfalls im Wesentlichen streifenförmig, wobei der Verlauf der Erhebung 15 sowie der Senke 16 parallel zueinander erfolgt.

Weiter sind eine erste Schwelle 17, eine zweite Schwelle 18, eine dritte Schwelle 19 sowie eine vierte Schwelle 20 auf die Wandung 4 aufgesetzt. Die Schwellen 17, 18, 19, 20 verstärken dabei die Wandung 4. Dabei ist der Verlauf der Schwellen 17, 18, 19, 20 ebenfalls im Wesentlichen streifenförmig gewählt, wobei die Streifen sich linear erstrecken und im Wesentlichen quer zur Querungsrichtung 3 verlaufen. Die Schwellen 17, 18, 19, 20 sind parallel zueinander ausgerichtet und beabstandet zueinander angeordnet. Dabei ist der Verlauf der Achsen der streifenförmigen Erhebung 15 bzw. der streifenförmigen Senke 16 im Wesentlichen quer zur Ausrichtung der Schwellen 17, 18, 19, 20 gewählt. Dadurch verbindet jede der Schwellen 17, 18, 19, 20 die Erhebung 15 sowie die Senke 16 mit dem Bund 11. Dabei ist die Gestalt der Schwellen 17, 18, 19, 20 derart gewählt, dass Abschnitte der Schwelle Teile der Anlagefläche des Bundes 11 ausbilden, so dass eine kammartige Begrenzung der Anlagefläche des Bundes 11 im Mündungsbereich der Schwellen 17, 18, 19, 20 an dem Bund 11 gegeben ist.

Vorliegend ist die Ausgestaltung von der Erhebung 15 sowie der Senke 16 derart gewählt, dass auf ihren jeweils abgewandten Seiten eine gegensinnige Ausformung vorgenommen wurde, so dass die Erhebung 15 auf der abgewandten Seite (der in der Figur 2 gezeigten Seite) in der Wandung 4 eine Senke 16' zur Verfügung stellt. Somit sind die Senke 16' auf der abgewandten Seite der Wandung 4 sowie die formkomplementäre Erhebung 15 auf der zugewandten Seite der Wandung 4 fluchtend deckungsgleich angeordnet. Analoges gilt für die auf der zugewandten Seite liegende Senke 16 sowie auf der abgewandten Seite formkomplementär ausgeformte Erhebung 15'. Durch eine derartige formkomplementäre Ausbildung ist die Wandungsstärke im Wesentlichen gleichbleibend ausgebildet, wobei durch die Anordnung der Schwellen 17, 18, 19, 20 eine Verstärkung der Wandung 4 im Bereich der Schwellen 17, 18, 19, 20 gegeben ist. Vorzugsweise sollten die Schwellen 17, 18, 19, 20 einstückig mit der Wandung 4 ausgeformt sein. Es kann jedoch auch vorgesehen sein, dass die Schwellen 17, 18, 19, 20 als diskrete Bauteile ausgebildet sind, welche einen winkelstarren Verbund mit der Wandung 4 aufweisen.

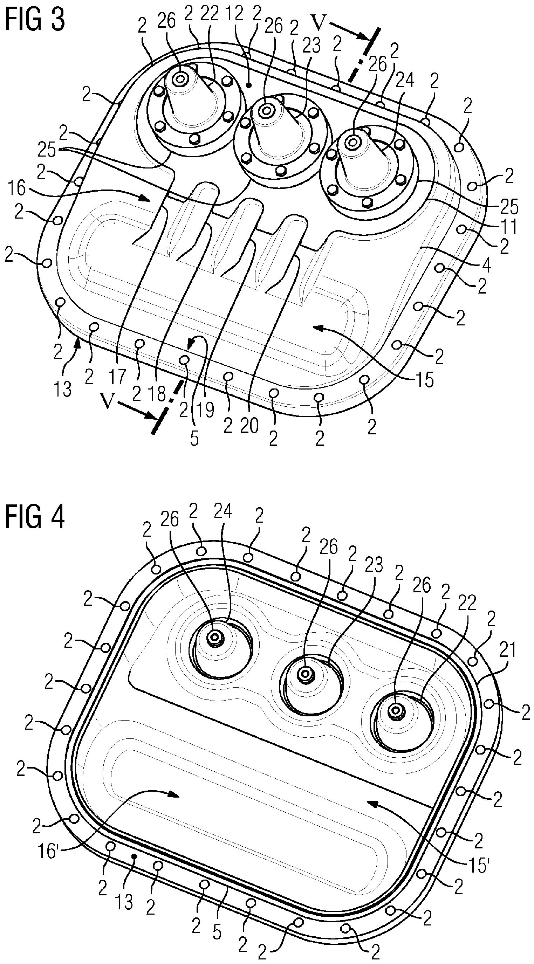

Vorliegend ist die Verschlussbaugruppe als Flanschdeckel ausgeführt, so dass mittels des Flanschblattes 1, welches in einer ersten Ebene 13 liegt, ein formkomplementärer Flansch verschließbar ist. Die Wandung 4 überspannt dabei eine Flanschöffnung des Flansches und dichtet diese ab. Dabei kann vorgesehen sein, dass die Wandung 4 nebst Übergang zu dem Flanschblatt 1 fluiddicht ausgebildet ist, wobei zur fluiddichten Ausgestaltung der Verschlussbaugruppe auch die Ausnehmungen 6, 7, 8 entsprechend fluiddicht zu verschließen sind (vgl. dazu Figuren 3, 4 und 5).

Vorteilhafterweise kann die Wandung 4 nach Art eines metallischen Gusskörpers ausgebildet sein, wobei das Flanschblatt 1 einstückig mit der Wandung 4 ausgebildet ist. Entsprechend können effizient in einem Gussverfahren die entsprechenden Erhebungen, Senken sowie der Bund usw. ausgeformt werden.

In der Figur 2 ist die in der Figur 1 gezeigte Verschlussbaugruppe mit ihrer abgewandten Seite gezeigt. Entsprechend erkennbar ist, dass die Erhebung 15 gemäß Figur 1 auf ihrer abgewandten Seite eine entsprechende Senke 16' ausbildet, wobei die in der zugwandten Seite der Figur 1 gezeigte Senke 16 auf der abgewandten Seite nach Figur 2 eine entsprechende Erhebung 15' ausbildet. Weiterhin ist zu erkennen, dass im Bereich der Ausnehmungen 6, 7, 8 eine Verstärkung der Wandung 4 vorgesehen ist, um insbesondere die Aufnahme der Sacklöcher 14 mit Innengewinde zu realisieren, wobei die Wandung 4 von den Sacklöchern 14 mit Innengewinde nicht vollständig durchsetzt ist. Entsprechend ist eine bis auf die Ausnehmungen 6, 7, 8 durchgriffsfreie Wandung 4 gegeben. Um die Verschlussbaugruppe fluiddicht mit einem Flansch zu verbinden, ist im Flanschblatt 1 auf der abgewandten Seite gemäß Figur 2 eine Ringnut 21 eingebracht, in welche ein Dichtungselement, beispielsweise ein elastisch verformbarer O-Ring, einlegbar ist.

In den Figuren 3 und 4 ist ein fluiddichter Verschluss der Ausnehmung 6, 7, 8 mittels einer ersten Phasenleiterdurchführung 22, einer zweiten Phasenleiterdurchführung 23 sowie einer dritten Phasenleiterdurchführung 24 gezeigt. Die Phasenleiterdurchführungen 22, 23, 24 weisen einen gleichartigen Aufbau auf. Jede der Phasenleiterdurchführungen 22, 23, 24 weist eine Ringscheibe 25 auf, wobei die Ringscheibe 25 von Durchgangsbohrungen durchsetzt ist, in welche Bolzen eingesetzt sind, die wiederum in den Sacklöchern 14 mit Innengewinde im Bund 11 verspannt sind. Dadurch können die Ringscheiben 25 gegen in den Ringnuten 10 eingelegte, elastisch verformbare Dichtungsringe gepresst werden, so dass einerseits eine fluiddichte Verbindung zwischen den Phasenleiterdurchführungen 22, 23, 24 sowie der Wandung 4 und andererseits eine mechanische Positionierung der jeweiligen Phasenleiterdurchführungen 22, 23, 24 gegeben ist. Die Ringscheiben 25 der Phasenleiterdurchführung 22, 23, 24 sind in Querungsrichtung 3 von jeweils einem Phasenleiter 26 durchsetzt. Die Phasenleiter 26 sind fluiddicht in ein Isolierstoffmaterial eingebettet, welches zur Ausbildung der Ringscheiben 25 dient. Das Isolierstoffmaterial ist beiderseits stirnseitig ausgehend von den Ringscheiben 25 jeweils in Querungsrichtung 3 verlaufend als Konus ausgeformt. Auf der zugewandten Seite nach Figur 3 sowie auf der abgewandten Seite nach Figur 4 sind die Konusse jeweils einer Phasenleiterdurchführung 22, 23, 24 koaxial jedoch gegensinnig ausgerichtet. Somit ist ein fluiddichter Isolierstoffkörper gebildet, welcher ausgehend von den Ringscheiben 25 in Querungsrichtung 3 gegensinnige Konusse aufweist, wobei die Phasenleiter 26 in den Isolierstoffkörpern in Querungsrichtung 3 verlaufend zentrisch eingebettet sind. Die Phasenleiter 26 weisen beispielsweise eine Gestalt als massive metallische Zylinder mit kreisförmigem Querschnitt auf, wobei stirnseitig Gewindebohrungen eingebracht sind, um eine elektrische sowie mechanische Kontaktierung der Phasenleiter 26 der Phasenleiterdurchführungen 22, 23, 24 zu ermöglichen. Die Querungsrichtung 3 ist dabei im Wesentlichen lotrecht zur ersten Ebene 13 des Flanschblattes 1 ausgerichtet.

In der Figur 4 ist die aus der Figur 2 bekannte Darstellung der Verschlussbaugruppe gezeigt, wobei auf der abgewandten Seite die die Ausnehmungen 6, 7, 8 durchsetzenden Phasenleiter 26 mit den sie umgebenden konischen Anformungen des Isolierstoffkörpers erkennbar sind. In die Ringnut 21 des ersten Flanschblattes 1 ist in der Figur 4 auch ein Dichtelement eingelegt.

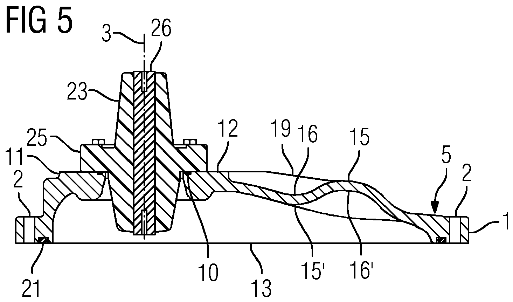

Die Figur 5 zeigt einen Querschnitt durch die Wandung 4 nebst Flanschblatt 1 sowie die zweite Phasenleiterdurchführung 23 mit einem Phasenleiter 26, wobei die Lage der Schnittebene der Figur 5 in der Figur 3 gezeigt ist. In der Schnittdarstellung der Figur 5 ist die formkomplementäre Anordnung einer Erhebung 15 auf der zugewandten Seite der Wandung 4 sowie einer gegengleich ausgeformten Senke 16' auf der abgewandten Seite der Wandung 4 erkenntlich. In analoger Weise ist die auf der zugewandten Seite angeordnete Senke 16 und deren formkomplementärer Erhebung 15' auf der abgewandten Seite sichtbar. Die Wandung 4 weist dabei eine annähernd gleichartige Wandungsstärke im Bereich der Erhebung 15, 15' sowie der Senke 16, 16' auf. Lediglich die zur Ankoppelung von weiteren Bauteilen bzw. zur Aufnahme von mechanischen Verspannkräften notwendigen Bereiche, wie das Flanschblatt 1 sowie der Bund 11 sowie Stabilisierungselemente wie die Schwellen 17, 18, 19, 20 wirken wandungsverstärkend. Die Querungsrichtung 3 liegt dabei im Wesentlichen lotrecht zur Lage der ersten Ebene 13 sowie zur Lage der zweiten Ebene 12. Die Wandung 4 verläuft von einer geraden Körperkante 5 pultartig ansteigend, wobei in dem pultartigen Anstieg der Wandung 4 die Erhebungen 15, 15' sowie die Senken 16, 16' in voneinander abgewandten Seiten der Wandung 4 angeordnet sind. Im Bereich des Bundes 11 liegt der Scheitelpunkt des pultartigen Anstieges der Wandung 4 vor. Im Scheitelpunkt des Pultes (der Wandung 4) ist der Bund 11 angeordnet, wobei der Bund 11 auf der vom pultartigen Anstieg der Wandung 4 abgewandten Seite sich an einen, im Wesentlichen lotrecht aufragenden Abschnitt der Wandung 4 anschließt, welcher in das Flanschblatt 1 übergeht. In der Darstellung des Schnittes nach Figur 5 ist weiter erkennbar, dass das Flanschblatt 1 die Wandung 4 sowie der Bund 11 mit den Schwellen 17, 18, 19, 20 einstückig im Gussverfahren ausgeformt wurden, so dass ein fluiddichter Verbund zwischen den einzelnen Baugruppen gegeben ist. Durch einen Verschluss der Ausnehmungen 6, 7, 8 mit den Phasenleiterdurchführungen 22, 23, 24 ist eine fluiddichte Barriere durch die Wandung 4 nebst Phasenleiterdurchführungen 22, 23, 24 im inneren Bereich des Flanschblattes 1 gegeben, wodurch das Flanschblatt 1 mit einem Flansch verflanschbar ist und somit eine Flanschöffnung des Flansches verschließbar ist. Insbesondere kann ein derartiger Verschluss aufgrund der Verwendung der entsprechenden Dichtelemente fluiddicht erfolgen. Mittels der Phasenleiterdurchführungen 22, 23, 24 ist es nunmehr möglich, trotz Verwendung von elektrisch leitfähigen Materialien zur Ausbildung der Wandung 4 sowie des Flanschblattes 1 einen Phasenleiter 26 elektrisch isoliert durch die Wandung 4 hindurchzuführen, so dass auf den voneinander abgewandten Seiten der Wandung 4 eine elektrische Kontaktierung des Phasenleiters 26 möglich ist, wodurch ein elektrischer Strom elektrisch isoliert durch die Wandung 4 hindurch übertragbar ist. Durch die Nutzung mehrerer Phasenleiterdurchführungen 22, 23, 24 mit jeweils einem elektrisch isolierten Phasenleiter 26 kann das Verschlusselement eingesetzt werden, um ein mehrphasiges Elektroenergieübertragungssystem durch die Wandung 4 hindurch zu übertragen. Ein derartiges mehrphasiges Elektroenergieübertragungssystem kann beispielsweise ein dreiphasiges Wechselspannungssystem sein. Entsprechend ist das Verschlusselement geeignet, an einer druckfluidisolierten Kapselung einer Elektroenergieübertragungseinrichtung verwendet zu werden. Ein Kapselungsgehäuse umgibt dabei einen oder mehrere Phasenleiter zur Übertragung von elektrischer Energie, wobei das Innere des Kapselungsgehäuses mit einem elektrisch isolierenden Fluid, bevorzugt unter Überdruck, befüllt ist. Als elektrisch isolierende Fluide eignen sich Gase sowie Flüssigkeiten. Insbesondere haben sich Stoffe wie Schwefelhexafluorid, Stickstoff, Kohlendioxid, Isolieröl, Isolierester usw. als geeignet erwiesen. Dadurch ist die abgewandte Seite der Wandung 4 diesem elektrisch isolierenden Medium, welches bevorzugt unter Überdruck steht, ausgesetzt und grenzt dieses ein. Die zugewandte Seite der Wandung 4 hingegen ist der Umgebung des Kapselungsgehäuses ausgesetzt. Entsprechend ist die Wandung 4 Teil einer fluiddichten Barriere und bei einer Druckbeaufschlagung des elektrisch isolierenden Fluides Teil eines Druckbehälters.

### Bezugszeichenliste

- 1: Flanschblatt
- 2: Bohrung
- 3: Querungsrichtung
- 4: Wandung
- 5: gerade Körperkante
- 6: erste Ausnehmung
- 7: zweite Ausnehmung
- 8: dritte Ausnehmung
- 9: Achse
- 10: Ringnut
- 11: Bund
- 12: zweite Ebene
- 13: dritte Ebene
- 14: Sacklöcher mit Innengewinde
- 15, 15': Erhebung
- 16, 16': Senke
- 17: erste Schwelle
- 18: zweite Schwelle
- 19: dritte Schwelle
- 20: vierte Schwelle
- 21: Ringnut
- 22: erste Phasenleiterdurchführung
- 23: zweite Phasenleiterdurchführung
- 24: dritte Phasenleiterdurchführung
- 25: Ringscheibe
- 26: Phasenleiter

## Patentansprüche

1. Verschlussbaugruppe für den Verschluss einer Öffnung an einem druckfluidisolierten Kapselungsgehäuse, mit einer Wandung (4), die zumindest eine Ausnehmung (6, 7, 8) aufweist, welche in einer Querungsrichtung (3) die Wandung (4) durchsetzt und von einem Bund (11) umgriffen ist,
**dadurch gekennzeichnet, dass**
in der Wandung (4) im Wesentlichen in der Querungsrichtung (3) eine Erhebung (15, 15') gewölbt aus der Wandung (4) hervortritt, wobei die Erhebung (15, 15') eine Versteifung der Wandung (4) bewirkt und im Wesentlichen quer zur Querungsrichtung eine Schwelle (17, 18, 19, 20), Bund (11) und Erhebung (15, 15') verbindend, in der Erhebung (15, 15') sowie in dem Bund (11) mündet.

2. Verschlussbaugruppe nach Anspruch 1,
**dadurch gekennzeichnet, dass**
in der Wandung (4) sich im Wesentlichen in der Querungsrichtung (3) eine Senke (16, 16') in die Wandung (4) eintaucht.

3. Verschlussbaugruppe nach Anspruch 1 oder 2,
**dadurch gekennzeichnet, dass**
Erhebung (15, 15') und Senke (16, 16') versetzt zueinander angeordnet sind.

4. Verschlussbaugruppe nach einem der Ansprüche 1 bis 3,
**dadurch gekennzeichnet, dass**
Erhebung (15, 15') und Senke (16, 16') auf voneinander abgewandten Seiten der Wandung (4) liegen.

5. Verschlussbaugruppe nach Anspruch 4,
**dadurch gekennzeichnet, dass**
Erhebung (15, 15') und Senke (16, 16') fluchtend angeordnet sind.

6. Verschlussbaugruppe nach einem der Ansprüche 1 bis 5,
**dadurch gekennzeichnet, dass**
im Wesentlichen quer zur Querungsrichtung (3) eine Schwelle (17, 18, 19, 20) in der Senke (16, 16') mündet.

7. Verschlussbaugruppe nach Anspruch 6,
**dadurch gekennzeichnet, dass**
mehrere Schwellen (17, 18, 19, 20) im Wesentlichen parallel zueinander verlaufend angeordnet sind.

8. Verschlussbaugruppe nach einem der Ansprüche 1 bis 7,
**dadurch gekennzeichnet, dass**
die Senke (16, 16') und/oder die Erhebung (15, 15'9 streifenförmig verlaufen.

9. Verschlussbaugruppe nach einem der Ansprüche 1 bis 8,
**dadurch gekennzeichnet, dass**
in die Ausnehmung (6, 7, 8) eine Phasenleiterdurchführung (22, 23, 24) eingesetzt ist.

10. Verschlussbaugruppe nach Anspruch 1 bis 9,
**dadurch gekennzeichnet, dass**
die Wandung (4) zumindest eine im Wesentlichen gerade Körperkante (5) aufweist, zu welcher eine Achse (9) zwischen einer ersten Ausnehmung (6, 7, 8) und einer zweiten Ausnehmung (6, 7, 8) im Wesentlichen parallel ausgerichtet ist.

11. Verschlussbaugruppe nach einem der Ansprüche 1 bis 10,
**dadurch gekennzeichnet, dass**
die Wandung (4) Teil eines Flanschdeckels ist.

12. Verschlussbaugruppe nach einem der Ansprüche 1 bis 11,
**dadurch gekennzeichnet, dass**
die Wandung (4) von einem Flanschblatt (1) zumindest teilweise umgriffen ist, in welchem die Wandung (4) pultartig verkippt angeordnet ist.

13. Verschlussbaugruppe nach Anspruch 12,
**dadurch gekennzeichnet, dass**
das Flanschblatt (1) eine Anlagefläche in einer ersten Ebene (13) aufweist und der Bund (11) eine Anlagefläche in einer zweiten Ebene (12) aufweist, wobei die beiden Ebenen (12, 13) im Wesentlichen parallel zueinander ausgerichtet sind.

## Claims

1. Closure assembly for the closure of an opening on a compressed fluid-insulated encapsulation housing, having a wall (4) which has at least one clearance (6, 7, 8) which penetrates the wall (4) in a traversing direction (3) and is encompassed by a border (11),
**characterized in that**
in the wall (4) an elevation (15, 15') emerges in an archlike manner from the wall (4) substantially in the traversing direction (3), wherein the elevation (15, 15') effects a reinforcement of the wall (4) and, while in a manner substantially transverse to the traversing direction connecting a threshold (17, 18, 19, 20), a border (11), and an elevation (15, 15'), opens in the elevation (15, 15') as well as in the border (11).

2. Closure assembly according to Claim 1, **characterized in that**
in the wall (4) a depression (16, 16') sinks into the wall (4) substantially in the traversing direction (3).

3. Closure assembly according to Claim 1 or 2,
**characterized in that**
the elevation (15, 15') and the depression (16, 16') are disposed so as to be mutually offset.

4. Closure assembly according to one of Claims 1 to 3,
**characterized in that**
the elevation (15, 15') and the depression (16, 16') lie on sides of the wall (4) that are mutually averted.

5. Closure assembly according to Claim 4, **characterized in that**
the elevation (15, 15') and the depression (16, 16') are disposed so as to be mutually aligned.

6. Closure assembly according to one of Claims 1 to 5,
**characterized in that**
a threshold (17, 18, 19, 20) opens into the depression (16, 16') in a manner substantially transverse to the traversing direction (3).

7. Closure assembly according to Claim 6, **characterized in that**
a plurality of thresholds (17, 18, 19, 20) are disposed so as to run substantially parallel with one another.

8. Closure assembly according to one of Claims 1 to 7,
**characterized in that**
the depression (16, 16') and/or the elevation (15, 15') run/runs in the manner of stripes.

9. Closure assembly according to one of Claims 1 to 8,
**characterized in that**
a phase-conductor conduit (22, 23, 24) is inserted in the clearance (6, 7, 8).

10. Closure assembly according to Claim 1 to 9,
**characterized in that**
the wall (4) has at least one substantially straight body edge (5) to which an axis (9) between a first clearance (6, 7, 8) and a second clearance (6, 7, 8) is aligned so as to be substantially parallel.

11. Closure assembly according to one of Claims 1 to 10,
**characterized in that**
the wall (4) is part of a flange cap.

12. Closure assembly according to one of Claims 1 to 11,
**characterized in that**
the wall (4) is at least partially encompassed by a flange plate (1) in which the wall (4) is disposed so as to be tilted in a mono-pitched manner.

13. Closure assembly according to Claim 12,
**characterized in that**
the flange plate (1) has a bearing face in a first plane (13), and the border (11) has a bearing face in a second plane (12), wherein the two planes (12, 13) are aligned so as to be substantially mutually parallel.

## Revendications

1. Module de fermeture pour fermer une ouverture d'un boîtier d'encapsulation à isolation par du fluide sous pression, comprenant une paroi (4), qui a au moins un évidement (6, 7, 8), lequel traverse la paroi (4) dans une direction (3) transversale et est enserré par un collier (11),
**caractérisé en ce que**
fait saillie de la paroi (4), sensiblement dans la direction (3) transversale, une surélévation (15, 15'), courbée à partir de la paroi (4), la surélévation (15, 15') provoquant une rigidification de la paroi (4) et, sensiblement transversalement à la direction transversale, un seuil (17, 18, 19, 20), reliant le collier (11) et la surélévation (15, 15'), débouchant dans la surélévation (15, 15') ainsi que dans le collier (11).

2. Module de fermeture suivant la revendication 1,
**caractérisé en ce que**,
dans la paroi (4), un puits (16, 16') plonge sensiblement dans la direction (3) transversale dans la paroi (4).

3. Module de fermeture suivant la revendication 1 ou 2,
**caractérisé en ce que**
surélévation (15, 15') et puits (16, 16') sont décalés l'un par rapport à l'autre.

4. Module de fermeture suivant l'une des revendications 1 à 3,
**caractérisé en ce que**
surélévation (15, 15') et puits (16, 16') sont sur des faces loin l'une de l'autre de la paroi (4).

5. Module de fermeture suivant la revendication 4,
**caractérisé en ce que**
la surélévation (15, 15') et le puits (16, 16') sont alignés.

6. Module de fermeture suivant l'une des revendications 1 à 5,
**caractérisé en ce qu'**
un seuil (17, 18, 19, 20) débouche dans le puits (16, 16') sensiblement transversalement à la direction (3) transversale.

7. Module de fermeture suivant la revendication 6,
**caractérisé en ce que**
plusieurs seuils (17, 18, 19, 20) s'étendent en étant sensiblement parallèles les uns aux autres.

8. Module de fermeture suivant l'une des revendications 1 à 7,
**caractérisé en ce que**
le puits (16, 16') et/ou la surélévation (15, 15') s'étendent en forme de bande.

9. Module de fermeture suivant l'une des revendications 1 à 8,
**caractérisé en ce que**,
dans l'évidement (6, 7, 8) est inséré un passage (22, 23, 24) de conducteur de phase.

10. Module de fermeture suivant la revendication 1 à 9,
**caractérisé en ce que**
la paroi (4) a au moins un bord (5) sensiblement rectiligne, par rapport auquel un axe (9) est dirigé sensiblement parallèlement entre un premier évidement (6, 7, 8) et un deuxième évidement (6, 7, 8).

11. Module de fermeture suivant l'une des revendications 1 à 10,
**caractérisé en ce que**
la paroi (4) fait partie d'un couvercle à bride.

12. Module de fermeture suivant l'une des revendications 1 à 11,
**caractérisé en ce que**
la paroi (4) est enserrée d'une feuille (1) de bride, dans laquelle la paroi (4) est disposée à basculement à la manière d'une console.

13. Module de fermeture suivant la revendication 12,
**caractérisé en ce que**
la feuille (1) de bride a une surface d'application dans un premier plan (13) et le collier (11) a une surface d'application dans un deuxième plan (12), les deux plans (12, 13) étant dirigés en étant sensiblement parallèles l'un à l'autre.
